# EUROPÄISCHE PATENTSCHRIFT

(11) **EP 0 630 165 B1**
(45) Veröffentlichungstag und Bekanntmachung des Hinweises auf die Patenterteilung: **19.01.2000**
(21) Anmeldenummer: 94105746.5
(22) Anmeldetag: 14.04.1994
(51) Int. Cl.: H04Q 7/22, H04M 17/00

(54) **Mobilfunknetz mit Guthabenkonten**
Mobile radio network with deposit accounts
Réseau radio mobile avec comptes de dépot

(30) Priorität: 16.04.1993 DE 4312362
(43) Veröffentlichungstag der Anmeldung: 21.12.1994
(60) Teilanmeldung: 98440273.5
(73) Patentinhaber: ALCATEL, 75008 Paris (FR)
(72) Erfinder: Klotz, Bernhard, D-70499 Stuttgart (DE)
(74) Vertreter: Knecht, Ulrich Karl, Dipl.-Ing.

(56) Entgegenhaltungen:
- EP-A- 0 459 337
- WO-A-92/06549
- US-A- 5 148 472

## Beschreibung

In einem herkömmlichen Mobilfunknetz, wie z.B. einem nach dem GSM-Standard ausgelegten Mobilfunknetz, erfolgt für die vermittelten Rufe die Gebührenabrechnung über Verrechnungskonten. Jedem Mobilfunk-Teilnehmer ist ein solches Verrechnungskonto (laufendes Konto) zugeordnet. In vorgegebenen Zeitabständen, z.B. monatlich, wird der Sollstand des jeweiligen Verrechnungskontos festgestellt und eine entsprechende Rechnung an den Mobilfunk-Teilnehmer verschickt. Die Verwaltung dieser Verrechnungskonten, die Erstellung der Rechnungen und die anschließende Zahlungsüberwachung erfordern eine aufwendige Rechnerunterstützung. Darüberhinaus erfordert die Verknüpfung der Verwaltung von Teilnehmerdaten und Kontodaten eine technisch aufwendige Verschlüsselung und Sicherung dieser Daten.

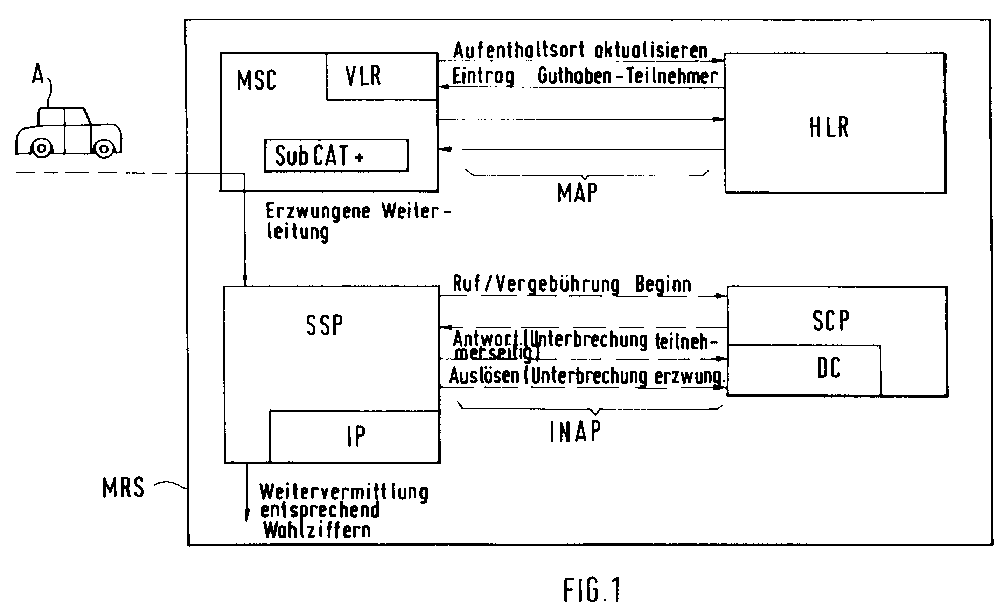

Aus US-A-5,148,472 ist als Variante zu der oben beschriebenen Gebührenabrechnung mittels Verrechnungskonten eine Gebührenabrechnung mittels Guthabenkonten bekannt. Innerhalb eines Mobilfunknetzes werden dort Guthabenkonten eingerichtet und Teilnehmerprofile verwaltet (s. dort in Spalte 9, Beschreibung des sog. "Metered Billing Service"). Diese Teilnehmerprofile sind Mobilfunkendgeräten zugeordnet, die zur Vermietung angeboten werden und den Mieter zur Nutzung von Mobilfunkdiensten berechtigen, bis das Gebührenguthaben aufgebraucht wurde. Der Mieter ist somit ein anonymer Mobilfunk-Teilnehmer, dessen Identität nicht in dem Teilnehmerprofil verschlüsselt ist. Das Teilnehmerprofil ermöglicht ihm jedoch den Netzzugang und die Verfügung des Gebührenguthabens. Das dort in US-A-5,148,472 beschriebene Mobilfunknetz enthält eine Funkvermittlungsstelle und eine Teilnehmerdatei (s. in dortiger Fig. 1 "cellular switch 100" bzw. "customer interface module 109"), mittels derer ankommende Rufe von solchen Mobilfunkteilnehmern, denen jeweils ein Guthabenkonto zugeordnet ist, selektiert werden. Außerdem enthält das dortige Mobilfunknetz eine Recheneinheit (s. in dortiger Fig.1 "message rating module 113"), mittels der für jeden Ruf eine Gebührenabrechnung durchgeführt wird, indem die Rufaktivitäten kontinuierlich überwacht werden und indem die Gebühren sofort kalkuliert werden für jedes Gespräch. Falls das verbleibende Guthaben einen vorgegeben unteren Grenzwert erreicht, wird die Dienstklasse ("terminating class of service") geändert, um den nächsten Ruf zu der Teilnehmerdatei ("customer interface module") umzuleiten, welche eine Sprachansage ausgibt. Diese Sprachansage enthält Anweisungen ("voice anouncement with instructions"), mit denen der Teilnehmer sein Konto durch Senden von DTMF-Signalen interaktiv mit weiterem Guthaben ausstatten kann. Falls dies nicht gemacht wird und das verbleibende Guthaben erschöpft ist, wird das Endgerät deaktiviert und weitere Telekommunikationsdienste werden abgelehnt. Demnach muß der Teilnehmer zunächst sein Guthabenkonto auffüllen, damit er dann die Telekomunikationsdienste weiterhin benutzen kann. Die in US-A-5,148,472 beschriebene Sprachansage ist ein recht aufwendiges Verfahren, da sie den Einsatz von Aufzeichnungsmitteln erfordert. Zudem belegt die Sprachansage sowie die anschließende Übertragung der DTMF-Signale den Sprachkanal, der dann nicht für das Telefonieren zur Verfügung steht.

Aus WO-A-92/06549 ist ein schnurloses Telefonsystem mit einem Guthaben-Speicher bekannt, bei dem ein Dekrementierungs-Algorithmus angewandt wird, der für eine fortlaufende Gebührenbelastung mit einer passenden Rate (s. dort auf S. 9-10: "charge limit number (CLN)") sorgt und den Ruf beendet, falls das Guthaben den Wert Null erreicht. Zuvor wird eine akustische oder optische Warnung ausgegeben. Da der Dekrementierungs-Algorithmus im Teilnehmer-Endgerät ausgeführt wird, muß jedes Teilnehmer-Endgerät entsprechende Prozessor- und Speichertechnik enthalten, was wiederum zu Zusatzkosten für die Teilnehmer-Endgeräte führt. Außerdem muß die Basisstation die Daten für die Gebührenabrechnung von den Teilnehmer-Endgeräten anfordern, was eine Belastung der Funkübertragung bedeutet.

Aus EP-A-0459337 ist ein Mobilfunksystem bekannt, bei dem die Gebührenabrechnung über Verrechnungskonten erfolgt. Dort werden Rechnungsbelege ("tickets de facturation") erstellt mittles Netzelementen eines Intelligenten Netzwerkes. Die Gebührenabrechnung über Guthabenkonten wird dort nicht beschrieben.

Aufgabe der Erfindung ist es, ein Mobilfunknetz bereitzustellen, in dem mit einfachen Mitteln eine Gebührenabrechnung mittels Guthabenkonten, ohne die eingangs genannten Nachteile, erfolgt sowie ein dafür geignetes Verfahren zur Vermittlung und Gebührenabrechnung vorzuschlagen.

Diese Aufgabe wird gelöst durch ein Mobilfunknetz mit den Merkmalen des Anspruch 1 und durch ein Verfahren nach dem nebengeordneten Anspruch 4.

Demnach enthält das Mobilfunksystem Netzelemente eines Intelligenten Netzes, mittels derer die selektierten Rufe vermittelt und eine Gebührenabrechnung durchgeführt werden, bei dem die Netzelemente einen Dienstevermittlungspunkt (SSP), der mit der Funkvermittlungsstelle (MSC) verbunden oder in diese integriert ist, und einen Dienstesteuerungspunkt (SCP), der mit dem Dienstevermittlungspunkt verbunden ist und eine Recheneinheit (DC) zur Gebührenabrechnung enthält, umfassen, bei dem der Dienstesteuerungspunkt (SCP) im Falle eines verbrauchten Guthabens eine Unterbrechung der Rufverbindung erzwingt, und bei dem der Dienstevermittlungspunkt (SSP) Mittel (IP) zur Signalisierung von Gebühreninformation an den jeweiligen Mobilfunk-Teilnehmers (A) enthält, die eine Gebühreninformation bewirken, bevor die Unterbrechnug der Rufverbindung erzwungen wird.

Ein Vorteil der Erfindung ergibt sich durch den separaten Aufbau dieser intelligenten Netzstruktur, so daß eine Gebührenabrechnung mittels Guthabenkonten unabhängig ist von der üblichen Gebührenabrechnung innerhalb der übrigen Netzstruktur, die herkömmlich aufgebaut ist. Eine Änderung oder Erweiterung der intelligenten Netzstruktur erzwingt keine Änderungen in der übrigen Netzstruktur.

Dadurch, daß eine Gebühreninformation bewirkt wird, bevor die Unterbrechnug der Rufverbindung erzwungen wird, kann der Teilnehmer selbst entscheiden, ob er das Gespräch bis zur Zwangsunterbrechung fortsetzt.

Vorteilhafte Ausgestaltungen der Erfindung sind den Unteransprüchen zu entnehmen.

Besonders vorteilhaft ist es die Gebühreninformation entsprechend einem Kurznachrichtenprotokoll zu signalisieren, wenn eine Unterschreitung eines vorgebbaren Gebührenguthabens ermittelt wird. Somit kann der Teilnehmer die Nachricht auf dem Anzeigenfeld seines Mobilfunktelefons ablesen und entscheiden, ob er das Gespräch für eine längere Zeitdauer fortsetzt.

Der Aufbau einer separaten intelligenten Netzstruktur ermöglicht vorteilhafter Weise auch, daß eine kontinuierliche Mitteilung des Kontostandes erfolgt, ohne herkömliche Netzprotokolle verändern zu müssen.

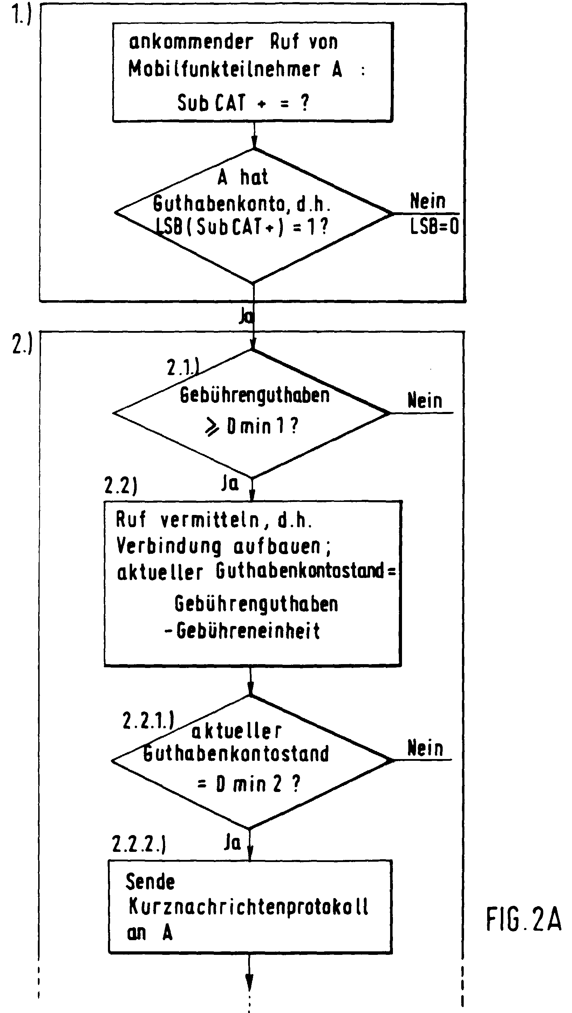

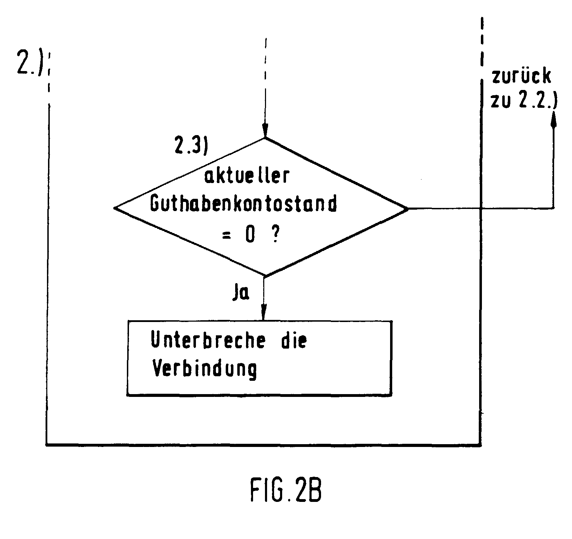

Es folgt unter Zuhilfenahme von Fig. 1, Fig. 2a und Fig. 2b die Beschreibung eines erfindungsgemäß ausgeführten Mobilfunknetzes und eines erfindungsgemäß ausgeführten Gebührenabrechnungs-Verfahrens in einem derartigen Mobilfunknetz.
- Fig. 1: zeigt schematisch den Aufbau eines Mobilfunknetzes, in dem mittels Guthabenkonten eine Gebührenabrechnung durchgeführt wird,
- Fig. 2a und b: zeigen ein Flußdiagramm zur Durchführung eines Verfahrens zur Gebührenabrechnung mittels Guthabenkonto.

In Fig. 1 sind schematisch die Elemente eines Mobilfunknetzes MRS dargestellt, mittels denen eine Vermittlung und Gebührenabrechnung eines ankommenden Rufes von einem Mobilfunk-Teilnehmer A erfolgt.

Das gezeigte Mobilfunknetz ist ein GSM-Mobilfunknetz. Es enthält eine Funkvermittlungsstelle MSC, die eine Besucher-Teilnehmerdatei VLR und eine Heimat-Teilnehmerdatei HLR verwaltet. Weiterhin enthält das Mobilfunknetz MRS einen Dienstevermittlungspunkt SSP, der mit der Funkvermittlungsstelle verbunden ist und einen Dienstesteuerungspunkt SCP, der mit dem Dienstevermittlungspunkt verbunden ist.

Der Dienstesteuerungspunkt SCP und der Dienstevermittlungspunkt SSP sind Netzelemente eines Intelligenten Netzes, wie es in dem Artikel "Basis für flexiblere Telecom-Dienste" von B. Eske-Christensen et. al. in der Zeitschrift Funkschau, Ausg. 12/1991 beschrieben ist.

Diese Netzelemente SSP und SCP bilden zusammen mit der Funkvermittlungsstelle MSC eine intelligente Netzstruktur, die Vermittlung und Gebührenabrechnung mittels Guthabenkonten ermöglicht. Diese Netzstruktur ist zusätzlich zum bekannten GSM-Mobilfunknetz aufgebaut und solchen Mobilfunk-Teilnehmern zugänglich, die jeweils über ein Guthabenkonto verfügen. Das jeweilige Guthabenkonto wird mittels einer Recheneinheit DC innerhalb des Dienstesteuerungspunktes SCP verwaltet.

Der Dienstesteuerungspunkt SCP ist eine elektronische Steuereinrichtung, die mittels sogenannten INAP-Protokollen (INAP: Intellegent Network Application Part) den Dienstevermittlungspunkt SSP steuert, der beispielsweise eine eigenständige Vermittlungseinrichtung darstellt.

Der Dienstevermittlungspunkt SSP ist hier z.B. mit einer einzigen Funkvermittlungsstelle MSC verbunden. Er kann auch mit mehreren Funkvermittlungsstellen verbunden sein. Die jeweilige Funkvermittlungsstelle MSC weist dem Dienstevermittlungspunkt SSP ankommende Rufe von solchen Mobilfunk-Teilnehmer A zu, die jeweils über ein Guthabenkonto verfügen, das innerhalb des Dienstesteuerungspunktes SCP verwaltet wird. Diese Zuweisung eines solchen Mobilfunk-Teilnehmers, im weiteren Guthaben-Teilnehmer (Debit Subscriber) genannt, erfolgt mittels Auswertung eines vorgegebenen Teilnehmerprofils SubCAT+. Dieses Teilnehmerprofil enthält z.B. ein digitales Wort das aus einer Bitfolge entsprechend einer herkömmlichen GSM-Teilnehmerkategorie und einem Zusatzbit zusammengesetzt ist. Das Zusatzbit zeigt an, ob der Mobilfunk-Teilnehmer ein Guthaben-Teilnehmer ist. Die verbleibende Bitfolge dient zur üblichen Einstufung des Teilnehmers, d.h. z.B. zur Feststellung der gebuchten Tarifkategorie. Weitere im Teilnehmerprofil enthaltene Information dient zum einen zur Durchführung von üblichen Netzfunktionen, wie z.B. die sogenannte Aufenthaltsüberwachung (Roaming), und zum anderen zur Bestimmung des Guthabenkontos innerhalb des Dienstesteuerungspunktes SCP. Übliche Netzfunktionen, wie die oben erwähnte Aufenthaltsüberwachung (Roaming), werden hier mittels Austausch eines sogenannten MAP-Protokolls zwischen den Teilnehmerdateien HLR und VLR durchgeführt. Dazu wird der momentane Aufenthaltsort des Mobilfunk-Teilnehmers erfaßt durch Standort-Aktualisierung (Location Update) und wird die im Teilnehmerprofil enthaltene Teilnehmerkennung in die Teilnehmerdatei VLR, die diesen Aufenthaltsort verwaltet, eingetragen durch Eintrag als "Teilnehmer/Guthaben-Teilnehmer" (Insert "Subscriber/Debit Subscriber").

Falls ein Ruf eines Guthaben-Teilnehmers A in der Funkvermittlungsstelle MSC festgestellt wird, wird dieser durch erzwungene Leitweglenkung (Forced Routing) zu dem Dienstevermittlungspunkt SSP weitergeleitet, der eine Weitervermittlung gemäß den gewählten Ziffern (Routing according to dialled digits) ausführt. Nach einer erfolgten Vermittlung wird eine Gebührenabrechnung ausgelöst durch den Rufbeginn (Call Start), bis der vermittelte Ruf teilnehmerseitig unterbrochen wird durch den Rufenden (Answer) oder der Dienstesteuerungspunkt SCP im Falle eines verbrauchten Guthabens eine Unterbrechung der Verbindung erzwingt durch eine Zwangsunterbrechung (Release).

Der Dienstevermittlungspunkt (SSP) enthält Mittel zur Signalisierung IP (Intelligent Peripherie), die eine Gebühreninformation des Guthaben-Teilnehmers bewirken, bevor eine solche Unterbrechung der Verbindung erzwungen wird. Derartige Mittel sind z.B. prozessorgesteuerte Schaltungen, die Protokolle gemäß dem sogenannten Kurznachrichtendienst (Short Message Service) erzeugen.

Der Dienstevermittlungspunkt SSP ist in diesem Ausführungsbeispiel als eigenständige Vermittlungseinrichtung ausgeführt. Es ist auch eine Integration des Dienstevermittlungspunktes SSP so denkbar, daß vorteilhaft vermittlungstechnische Baugruppen der Funkvermittlungsstelle MSC für Aufgaben des Dienstevermittlungspunktes SSP genutzt werden.

Die Vermittlung und Gebührenabrechnung mittels eines Guthabenkontos wird im weiteren näher anhand der nach Fig. 2 dargestellten Verfahrensschritte beschrieben:

In einem ersten Schritt 1) wird, sobald ein Ruf eines Mobilfunk-Teilnehmers A innerhalb einer Funkvermittlungsstelle eintrifft, mittels einem dem Teilnehmer zugeordneten Teilnehmerprofil SubCAT+ geprüft, ob dieser ein Guthabenkonto hat. Die Prüfung des Zusatzbits, das z.B. als geringwertigstes Bit LSB eingeordnet ist, bewirkt eine Selektion der sogenannten Guthaben-Teilnehmer von den anderen Mobilfunk-Teilnehmern.

In einem zweiten Schritt 2) wird der ankommende Ruf des Guthaben-Teilnehmers wie folgt vermittelt und wird eine Gebührenabrechnung durchgeführt:

Zunächst wird das Gebührenguthaben gemäß 2.1) abgefragt und mit einem vorgegebenen Mindest-Guthaben Dmin 1 von z.B. DM 5,--verglichen. Der Ruf wird anschließend nur dann vermittelt, falls das Guthabenkonto nicht weniger als dieses Mindest-Guthaben aufweist, so daß keine Verbindung aufgebaut wird, falls eine baldige Zwangsunterbrechung (Release) droht. Der Teilnehmer A muß dann sein Guthabenkonto z.B. per Zahlungsanweisung an den Mobilfunknetz-Betreiber auffüllen.

Kann der Ruf vermittelt werden, so folgt die Gebührenabrechnung gemäß 2.2). Jeweils nach Abbuchung einer Gebühreneinheit von dem Guthabenkonto wird der aktuelle Guthabenkontostand ermittelt und mit einem Mindestwert Dmin2 gemäß 2.2.1) verglichen. Hat das Guthaben diesen Mindestwert Dmin2 von z.B. DM 10,-- erreicht, wird über die Funkvermittlungsstelle ein Kurznachrichtenprotokoll (short message) an den Teilnehmer A gesendet (siehe 2.2.2.)).

Der Teilnehmer A kann die Nachricht auf dem Anzeigenfeld seines Mobilfunktelefons ablesen und entscheiden, ob er das Gespräch für eine längere Zeitdauer fortsetzt.

Ist kein Guthaben mehr auf dem Guthabenkonto verbucht, so wird gemäß 2.3) die Rufverbindung zwangsweise unterbrochen. Andernfalls wird mit der Gebührenabrechnung entsprechend den oben beschriebenen Schritten gemäß 2.2) ff. fortgefahren.

Das vorgestellte Mobilfunknetz und das darin angewendete Verfahren ermöglichen eine intelligente Vermittlung und Gebührenabrechnung von Rufen, die von Guthaben-Teilnehmern veranlaßt werden. Die Selektion dieser Rufe und ihre separate Behandlung erspart eine aufwendige Verwaltungstechnik, wie sie bei Rufen von herkömmlichen Teilnehmern notwendig ist. Die Guthaben-Teilnehmer werden im Mobilfunknetz anonym vermittelt und es wird eine Gebührenabrechnung durchgeführt. Durch den Aufbau einer separaten intelligenten Netzstruktur sind Erweiterungen von Teilnehmerdiensten, wie z.B. kontinuierliche Mitteilung des aktuellen Kontostands, möglich, ohne die herkömmliche Struktur des Mobilfunknetzes oder herkömmliche Netzprotokolle, wie z.B. das MAP-Protokoll, verändern zu müssen.

## Patentansprüche

1. Mobilfunknetz (MRS) mit einer Funkvermittlungsstelle (MSC) und mit einer Teilnehmerdatei (VLR, HLR), mittels denen ankommende Rufe von solchen Mobilfunk-Teilnehmern (A) selektiert werden, denen jeweils ein Guthabenkonto zugeordnet ist und die bis zum Verbrauch ihres Guthabens zur Nutzung von Mobilfunkdiensten berechtigt sind,
**dadurch gekennzeichnet**, daß Netzelemente (SSP, SCP) eines Intelligenten Netzes die selektierten Rufe vermitteln und eine Gebührenabrechnung durchführen, daß die Netzelemente einen Dienstevermittlungspunkt (SSP), der mit der Funkvermittlungsstelle (MSC) verbunden oder in diese integriert ist, und einen Dienstesteuerungspunkt (SCP), der mit dem Dienstevermittlungspunkt verbunden ist und eine Recheneinheit (DC) zur Gebührenabrechnung enthält, umfassen, daß der Dienstesteuerungspunkt (SCP) im Falle eines verbrauchten Guthabens eine Unterbrechung der Rufverbindung erzwingt, und daß der Dienstevermittlungspunkt (SSP) Mittel (IP) zur Signalisierung von Gebühreninformation an den jeweiligen Mobilfunk-Teilnehmers (A) enthält, die eine Gebühreninformation bewirken, bevor die Unterbrechnug der Rufverbindung erzwungen wird.

2. Mobilfunknetz (MRS) nach Anspruch 1, dadurch gekennzeichnet, daß die Mittel (IP) zur Signalisierung die Gebühreninformation entsprechend einem Kurznachrichtenprotokoll dann signalisieren, wenn die Recheneinheit (DC) eine Unterschreitung eines vorgebbaren Gebührenguthabens (Dmin2) ermittelt.

3. Mobilfunknetz (MRS) nach Anspruch 1, dadurch gekennzeichnet, daß die Mittel (IP) zur Signalisierung der Gebühreninformation eine kontinuierliche Mitteilung des Kontostandes durchführen.

4. Verfahren zur Vermittlung und Gebührenabrechnung von ankommenden Rufen in einem Mobilfunknetz (MRS), mit folgenden Schritten:
1.) innerhalb einer Funkvermittlungsstelle (MSC) werden ankommende Rufe von solchen Mobilfunk-Teilnehmern (A) selektiert, denen jeweils ein Guthobenkonto mittels eines vorgegebenen Teilnehmerprofils (SubCAT+) zugeordnet ist und die bis zum Verbrauch ihres Guthabens zur Nutzung von Mobilfunkdiensten berechtigt sind;
2.) anschließend werden die selektierten Rufe vermittelt und es erfolgt eine Gebührenabrechnung, indem jeweils:
2.1) der selektierte Ruf dann vermittelt und eine Verbindung geschaltet wird, falls das Guthabenkonto ein vorgegebenes Gebührenguthaben (Dmin1) aufweist,
**dadurch gekennzeichnet**, daß mittels Netzelementen eines Intelligenten Netzes vermittelt und eine Gebührenabrechnung durchgeführt wird, wobei der selektierte Ruf und die Verbindung innerhalb eines Dienstevermittlungspunktes (SSP) des Intelligenten Netzes vermittelt bzw. geschaltet werden, und wobei
2.2) innerhalb eines Dienstesteuerungspunktes (SCP) des Intelligenten Netzes für den vermittelten Ruf eine Gebührenabrechnung durchgeführt wird, indem fortlaufend eine vorgegebene Gebühreneinheit von dem Guthabenkonto abgebucht wird, und wobei
2.2.1) Gebühreninformation durch den Dienstevermittlungspunkt (SSP) an den jeweiligen Mobilfunk-Teilnehmer (A) signalisiert wird, bevor
2.3) innerhalb des Dienstevermittlungspunktes (SSP) die Verbindung unterbrochen wird, falls das Guthabenkonto kein Gebührenguthaben aufweist.

5. Verfahren nach Anspruch 4, dadurch gekennzeichnet, daß zwischen den Schritten 2.2) und 2.3) wie folgt verfahren wird:
2.2.1) nach dem Abbuchen der jeweiligen Gebühreneinheit wird ein aktueller Guthabenkontostand ermittelt und an den Dienstevermittlungspunkt (SSP) signalisiert,
2.2.2) der Dienstevermittlungspunkt (SSP) signalisiert den aktuellen Guthabenkontostand mittels eines Kurznachrichtenprotokolls an den entsprechenden Mobilfunk-Teilnehmer (A).

6. Verfahren nach Anspruch 4, dadurch gekennzeichnet, daß zwischen den Schritten 2.2) und 2.3) wie folgt verfahren wird:
2.2.1) nach dem Abbuchen der jeweiligen Gebühreneinheit wird ein aktueller Guthabenkontostand ermittelt und dann an den Dienstevermittlungspunkt (SSP) signalisiert, falls der aktuelle Guthabenkontostand einem vorgegebenen Mindestwert (Dmin2) entspricht,
2.2.2) der Dienstevermittlungspunkt (SSP) signalisiert anschließend diesen aktuellen Guthabenkontostand (Dmin2) mittels eines Kurznachrichtenprotokolls an den entsprechenden Mobilfunk-Teilnehmer (A).

7. Verfahren nach Anspruch 6, dadurch gekennzeichnet, daß der vorgegebene Mindestwert (Dmin2) dem vorgegebenen Gebührenguthaben (Dmin 1) entspricht.

## Claims

1. A mobile-radio network (MRS) comprising a mobile switching center (MSC) and a subscriber database (VLR, HLR) by means of which incoming calls from mobile subscribers (A) each having a prepaid account are selected, said mobile subscribers (A) being entitled to use mobile-radio services until their credit is exhausted,
**characterized in** that network elements (SSP, SCP) of an intelligent network switch the selected calls through and implement call charging, that the network elements comprise a service switching point (SSP), which is connected to or incorporated in the mobile switching center (MSC), and a service control point (SCP), which is connected to the service switching point and includes an arithmetic unit (DC) for call charging, that the service control point (SCP) forces a release of the connection if a credit is exhausted, and that the service switching point (SSP) comprises means (IP) for signaling call charge information to the respective mobile subscriber (A) which causes an indication of the charge information before the release of the connection is forced.

2. A mobile-radio network (MRS) as claimed in claim 1, characterized in that the signaling means (IP) signal the call charge information in accordance with a short-message protocol when the arithmetic unit (DC) determines that the credit balance has fallen below a predeterminable amount (Dmin2).

3. A mobile-radio network (MRS) as claimed in claim 1, characterized in that the means (IP) for signaling the call charge information provide continuous information about the account balance.

4. A method of switching through and charging for incoming calls in a mobile-radio network (MRS), comprising the steps of:
(1) selecting, within a mobile switching center (MSC), incoming calls from mobile subscribers (A) having respective prepaid accounts assigned to them by means of predetermined subscriber profiles (SubCAT+) and entitled to use mobile-radio services until their credits are exhausted;
(2) subsequently switching the selected calls through and charging for them by:
(2.1) establishing a connection for the selected call if the prepaid account shows a predetermined credit balance (Dmin1), **characterized in** that the through-switching and charging are performed by means of network elements of an intelligent network, with the connection for the selected call being established within a service switching point (SSP) of the intelligent network, and
(2.2) charging for the call within a service control point (SCP) of the intelligent network by consecutively deducting a predetermined unit fee from the prepaid account, and
(2.2.1) signaling call charge information from the service switching point (SSP) to the respective mobile subscriber (A) before
(2.3) the connection is released within the service switching point (SSP) if the prepaid account shows no credit balance.

5. A method as claimed in claim 4, characterized in that between steps (2.2) and 2.3), the following steps are taken:
(2.2.1) after the deduction of the respective unit fee, determining a current credit balance and signaling it to the service switching point (SSP); and
(2.2.2) signaling the current credit balance from the service switching point (SSP) to the respective mobile subscriber (A) by means of a short message.

6. A method as claimed in claim 4, characterized in that between steps (2.2) and (2.3), the following steps are taken:
(2.2.1) after the deduction of the respective unit fee, determining a current credit balance and signaling it to the service switching point (SSP) if it corresponds to a predetermined minimum value (Dmin2); and
(2.2.2) subsequently signaling said current credit balance (Dmin2) from the service switching point (SSP) to the respective mobile subscriber (A) by means of a short message.

7. A method as claimed in claim 6, characterized in that the predetermined minimum value (Dmin2) corresponds to the predetermined credit balance (Dmin1).

## Revendications

1. Réseau radiotéléphonique mobile (MRS) avec un central radiotéléphonique (MSC) et un fichier d'abonné (VLR, HLR), à l'aide desquels sont sélectionnés des appels entrants provenant de ceux des abonnés (A) au téléphone mobile, auxquels respectivement un compte courant simple est affecté et qui sont autorisés à utiliser des services radiotéléphoniques mobiles jusqu'à épuisement de leur avoir, caractérisé en ce que des éléments de réseau (SSP, SCP) d'un réseau intelligent acheminent les appels sélectionnés et effectuent une taxation, en ce que les éléments de réseau comprennent un centre d'acheminement de services (SSP), qui est relié au central radiotéléphonique (MSC) ou y est intégré, et un centre de commande de services (SCP), qui est relié au centre d'acheminement de services, et une unité de calcul (DC) pour la taxation, en ce que le centre de commande de services (SCP) dans le cas d'un avoir épuisé impose une interruption de la communication, et en ce que le centre d'acheminement de services (SSP) contient des moyens (IP) pour signaler des informations de taxation à l'abonné respectif (A) du téléphone mobile, qui déclenchent des informations de taxation avant que l'interruption de la communication ne soit imposée.

2. Réseau radiotéléphonique mobile (MRS) selon la revendication 1, caractérisé en ce que les moyens (IP) pour signaler les informations de taxation selon un protocole de messages courts signalent lorsqu'une unité de calcul (DC) détecte un sous-dépassement d'un avoir en taxe (Dmin2) pouvant être prédéterminé.

3. Réseau radiotéléphonique mobile (MRS) selon la revendication 1, caractérisé en ce que les moyens (IP) pour signaler les informations de taxation effectuent une indication continue du relevé de compte.

4. Procédé pour l'acheminement et la taxation d'appels entrants dans un réseau radiotéléphonique mobile (MRS), comprenant les étapes suivantes consistant à :
1) sélectionner à l'intérieur d'un central radiotéléphonique (MSC) des appels entrants provenant de ceux des abonnés (A) au téléphone mobile auxquels respectivement un compte courant simple est affecté au moyen d'un profil d'abonné prédéterminé (SubCAT+) et qui sont autorisés à utiliser des services radiotéléphoniques mobiles jusqu'à épuisement de leur avoir;
2) acheminer ensuite les appels sélectionnés et effectuer une taxation, respectivement :
2.1) en acheminant ensuite l'appel sélectionné et en commutant une connexion si le compte courant simple présente d'un avoir en taxe prédéterminé (Dmin1),
caractérisé en ce qu'à l'aide d'éléments de réseau d'un réseau intelligent, l'acheminement a lieu et une taxation est effectuée, dans lequel l'appel sélectionné et la connexion à l'intérieur d'un centre d'acheminement de services (SSP) du réseau intelligent est acheminé ou commuté, et dans lequel
2.2) à l'intérieur d'un centre de commande de services (SCP) du réseau intelligent, une taxation est effectuée pour l'appel acheminé, en débitant en continu une unité de taxation prédéterminée du compte courant simple, et dans lequel
2.2.1) des informations de taxation sont signalées par le centre d'acheminement de services (SSP) à l'abonné respectif (A) au téléphone mobile,
2.3) avant d'interrompre la connexion à l'intérieur du centre d'acheminement de services (SSP) si le compte courant simple ne présente aucun avoir en taxe.

5. Procédé selon la revendication 4, caractérisé en ce qu'entre les étapes 2.2) et 2.3), il est procédé comme suit :
2.2.1) après le débit de l'unité de taxation respective, un relevé de compte courant simple actuel est déterminé et signalé au centre d'acheminement de services (SSP),
2.2.2) le centre d'acheminement de services (SSP) signale le relevé de compte courant simple actuel au moyen d'un protocole de messages courts à l'abonné au téléphone mobile (A) correspondant.

6. Procédé selon la revendication 4, caractérisé en ce qu'entre les étapes 2.2) et 2.3), il est procédé comme suit :
2.2.1) après le débit de l'unité de taxation respective, un relevé de compte courant simple actuel est déterminé et signalé ensuite au centre d'acheminement de services (SSP), si le relevé de compte courant simple actuel correspond à une valeur minimale prédéterminée (Dmin2),
2.2.2) le centre d'acheminement de services (SSP) signale ensuite ce relevé de compte courant simple actuel (Dmin2) au moyen d'un protocole de messages courts à l'abonné au téléphone mobile (A) correspondant.

7. Procédé selon la revendication 6, caractérisé en ce que la valeur minimale prédéterminée (Dmin2) correspond à l'avoir de compte courant simple prédéterminé (Dmin1).
